(19) Europäisches Patentamt
European Patent Office
Office européen des brevets

(11) **EP 4 246 091 A1**

(12) **EUROPEAN PATENT APPLICATION**

(43) Date of publication:
**20.09.2023 Bulletin 2023/38**

(21) Application number: **23161742.4**

(22) Date of filing: **14.03.2023**

(51) International Patent Classification (IPC):
**G01C 21/20** (2006.01)    **G05D 1/02** (2020.01)
**G06Q 10/08** (2023.01)

(52) Cooperative Patent Classification (CPC):
**G01C 21/206; G05D 1/021; G06Q 10/047;
G06Q 10/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.03.2022 JP 2022041727**

(71) Applicant: **Mitsubishi Heavy Industries, Ltd.
Tokyo 100-8332 (JP)**

(72) Inventors:
• **SAIMEN, Atsuyoshi
  Tokyo, 100-8332 (JP)**
• **TAKAO, Kenji
  Tokyo, 100-8332 (JP)**

(74) Representative: **Studio Torta S.p.A.
Via Viotti, 9
10121 Torino (IT)**

(54) **INFORMATION PROCESSING DEVICE, MOVEMENT CONTROL SYSTEM, INFORMATION PROCESSING METHOD, AND PROGRAM**

(57)    Object

To suppress a reduction in the operating ratio of a mobile body.

Solving Means

An information processing device includes a movement destination information acquisition unit configured to acquire movement destination information indicating a position of a movement destination, a route setting unit configured to set a route to the movement destination for a mobile body based on the movement destination information, and an event acquisition unit configured to acquire event information indicating that an event unexpected at a time of setting the route has occurred for the mobile body moving along the route. The route setting unit sets a next route of the mobile body based on the event information.

FIG. 1

EP 4 246 091 A1

## Description

Technical Field

The present disclosure relates to an information processing device, a movement control system, an information processing method, and a program.

Background Art

There is a known technology for setting travel routes for a plurality of mobile bodies that move automatically. For example, Patent Document 1 describes an operation management method in which a basic travel route that is a shortest distance from a current position of a cargo handling vehicle to a start position of a work is set, and when the basic travel route interferes with a basic travel route of another cargo handling vehicle, the basic travel route of the vehicle having a higher priority is adopted and a detour route is set for the vehicle having a lower priority.

Citation List

Patent Literature

Patent Document 1: JP 6599139 B

Summary of Invention

Technical Problem

However, an unexpected event, such as a failure, may occur during actual operation of mobile bodies, failing to appropriate movements along scheduled routes. In such a case, it is conceivable, for example, to stop all the mobile bodies, then manually resolve the event (recover the failed mobile body in a case of a failure, for example), and resume the movements. Unfortunately, such measures take time to complete the movements of the mobile bodies, lowering an operating ratio. Therefore, there is a need for suppressing a reduction in the operating ratio of the mobile body.

The present disclosure has been made to solve the above-described problem, and an object of the present disclosure is to provide an information processing device, a movement control system, an information processing method, and a program that can suppress the reduction in the operating ratio of mobile bodies.

Solution to Problem

An information processing device according to the present disclosure includes a movement destination information acquisition unit configured to acquire movement destination information indicating a position of a movement destination, a route setting unit configured to set a route to the movement destination for a mobile body based on the movement destination information, and an event acquisition unit configured to acquire event information indicating that an event unexpected at a time of setting the route has occurred for the mobile body moving along the route. The route setting unit sets a next route of the mobile body based on the event information.

A movement control system according to the present disclosure includes the information processing device and a management device configured to set the movement destination information. The information processing device sets a next route of the mobile body while maintaining a content of the movement destination information.

A movement control system according to the present disclosure includes the information processing device and the mobile body.

An information processing method according to the present disclosure includes acquiring movement destination information indicating a position of a movement destination, setting a route to the movement destination for a mobile body based on the movement destination information, and acquiring event information indicating that an event unexpected at a time of setting the route has occurred for the mobile body moving along the route. In the setting a route, a next route of the mobile body is set based on the event information.

A program according to the present disclosure is a program for causing a computer to perform acquiring movement destination information indicating a position of a movement destination, setting a route to the movement destination for a mobile body based on the movement destination information, and acquiring event information indicating that an event unexpected at a time of setting the route has occurred for the mobile body moving along the route. In the setting a route, a next route of the mobile body is set based on the event information.

Advantageous Effects of Invention

According to the present disclosure, the reduction in the operating ratio of a mobile body can be suppressed.

Brief Description of Drawings

FIG. 1 is a schematic view of a movement control system according to the present embodiment.
FIG. 2 is a schematic view of a configuration of a mobile body.
FIG. 3 is a schematic block diagram of a management device.
FIG. 4 is a schematic block diagram of an information processing device.
FIG. 5 is a schematic block diagram of a control device for the mobile body.
FIG. 6 is a table showing an example of movement destination information.

FIG. 7 is a schematic view illustrating an example of setting a next route.

FIG. 8 is a schematic view illustrating an example of setting a next route.

FIG. 9 is a schematic view for describing an example of changes in work assignment after charging is completed.

FIG. 10 is a schematic view illustrating an example of setting a next route.

FIG. 11 is a schematic view illustrating an example of setting a next route.

FIG. 12 is a schematic view illustrating an example of setting a next route.

FIG. 13 is a schematic view illustrating an example of setting a next route.

FIG. 14 is a flowchart illustrating a processing flow of an information processing device.

Description of Embodiments

Hereinafter, preferred embodiments of the present disclosure will be described in detail with reference to the accompanying drawings. Note that the present disclosure is not limited to these embodiments, and when there are a plurality of embodiments, the present disclosure is intended to include a configuration combining these embodiments.

Movement Control System

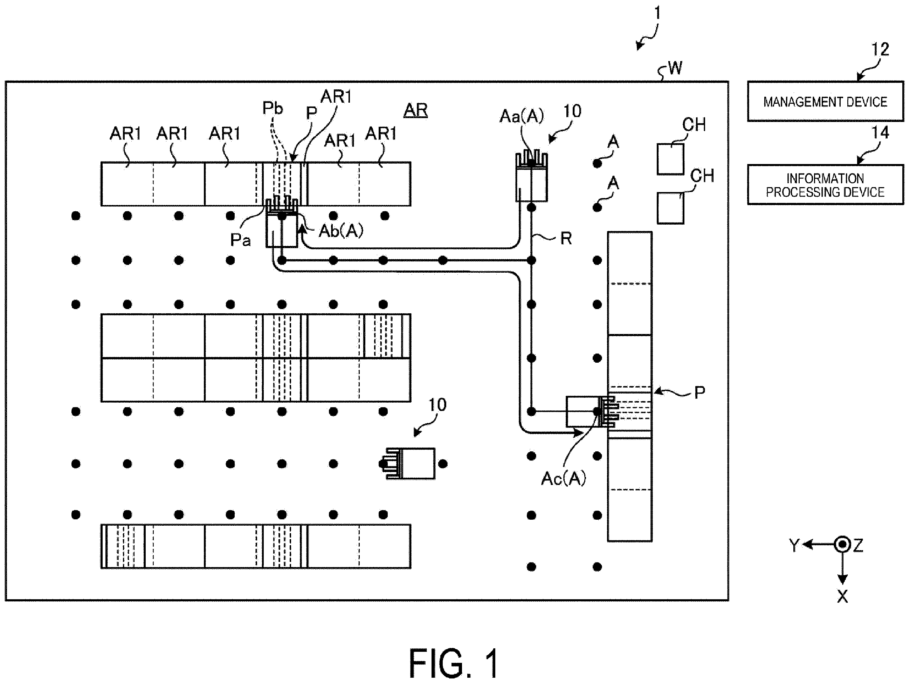

FIG. 1 is a schematic view of a movement control system according to the present embodiment. As illustrated in FIG. 1, a movement control system 1 according to the present embodiment includes a mobile body 10, a management device 12, and an information processing device 14. The movement control system 1 is a system that controls the movement of the mobile body 10 belonging to a facility W. The facility W is a facility, such as a warehouse, that is logistically managed. The movement control system 1 causes the mobile body 10 to pick up and convey a target object P disposed within an area AR in the facility W. The area AR is, for example, a floor surface of the facility W, and is an area in which the target object P is placed and through which the mobile body 10 moves. In the present embodiment, the target object P is a conveyance target object composed of a pallet and a burden loaded on the pallet. The target object P includes an opening Pb into which a fork 24 of the mobile body 10 to be described later is inserted, and the opening Pb is formed in a front surface Pa of the target object P. However, the target object P is not limited to an object composed of a pallet and a burden loaded on the pallet, and may be only a burden without a pallet, for example.

Hereinafter, one direction along the area AR is referred to as an X direction, and a direction along the area AR that is orthogonal to the X direction is referred to as a Y direction. In the present embodiment, the Y direction is a direction orthogonal to the X direction. The X direction and the Y direction may be horizontal directions. A direction orthogonal to the X direction and the Y direction, more specifically, an upward direction in the vertical direction is referred to as a Z direction. In the present embodiment, unless otherwise specified, a "position" refers to a position (coordinates) in a coordinate system in a two dimensional plane on the area AR (the coordinate system of the area AR). Also, unless otherwise specified, an "orientation" of the mobile body 10 or the like refers to an orientation of the mobile body 10 in the coordinate system of the area AR, and means a yaw angle (rotation angle) of the mobile body 10 with the X direction defined as 0 degrees when viewed from the Z direction.

Placement Area

A plurality of placement areas AR1 is disposed in the area AR in the facility W. The placement areas AR1 are configured to be used as areas in which the target object P is placed. The target object P may be placed or may not be placed in each placement area AR1 depending on the situation of the facility W. The position (coordinates), the shape, and the size of the placement area AR1 are determined in advance. In the example illustrated in FIG. 1, the placement areas AR1 are set on a shelf provided in the area AR, but are not limited thereto, and may be provided on the area AR (i.e., on the floor of the facility W), or may be provided in a loading platform of a vehicle that has conveyed the target object P into the facility W. In addition, in the present embodiment, the placement area AR1 is defined for each target object P, and one target object P is placed in each placement area AR1, but the present disclosure is not limited thereto. For example, the placement area AR1 may be set as a free space in which a plurality of target objects P are placed. In addition, in the example in FIG. 1, the placement area AR1 has a rectangular shape, but may have any shape and any size, and the number of the placement areas AR1 is also optional.

Waypoint

In the area AR, a waypoint A is set for each position (coordinates). The route R along which the mobile body 10 moves is configured to connect the waypoints A. That is, a route connecting the waypoints A through which the mobile body 10 is scheduled to pass is the route R of the mobile body 10. The waypoints A are set according to the layout of the facility W such as the positions of the placement areas AR1 and passages. For example, the waypoints A are set in a matrix form in the area AR, and the positions and the number of the waypoints A are set such that a route R connecting a position facing one placement area AR1 to a position facing another optional placement area AR1 can be set.

The position facing the placement area AR1 may be, for example, a position at which the mobile body 10 can pick up the target object P placed in the placement area AR1.

Mobile Body

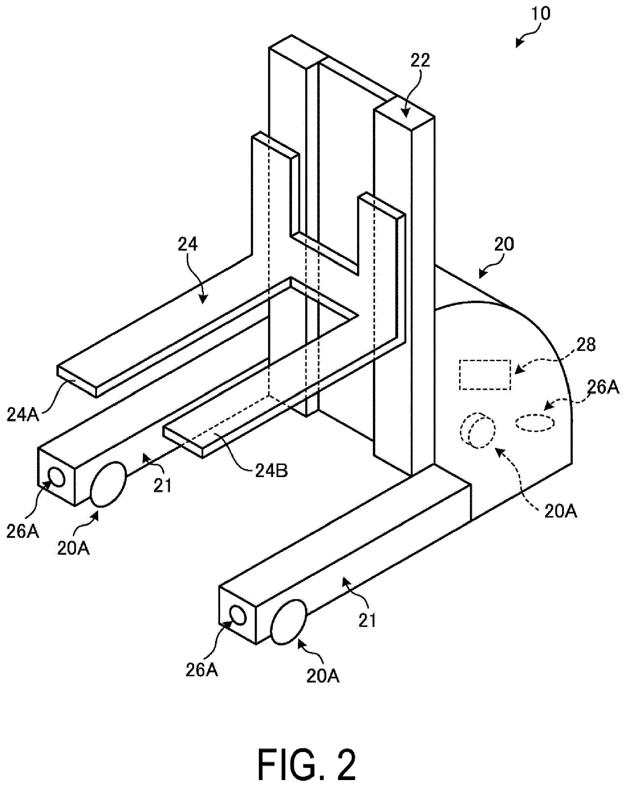

FIG. 2 is a schematic view of a configuration of a mobile body. The mobile body 10 is a device that can move automatically and convey the target object P. Further, in the present embodiment, the mobile body 10 is a forklift, and more specifically, a so-called automated guided vehicle (AGV) or a so-called automated guided forklift (AGF). However, the mobile body 10 is not limited to a forklift for conveying the target object P, and may be any device capable of moving automatically.

As illustrated in FIG. 2, the mobile body 10 includes a vehicle body 20, a wheel 20A, a straddle leg 21, a mast 22, a fork 24, a sensor 26A, and a control device 28. The straddle leg 21 is a shaft-like member that is disposed in pairs at one end portion of the vehicle body 20 in a front-back direction and protrudes from the vehicle body 20. The wheel 20A is disposed at a leading end of each of the straddle legs 21 and at the vehicle body 20. That is, a total of three wheels 20A are disposed, but the positions and the number of the wheels 20A disposed may be optional. The mast 22 is movably attached to the straddle legs 21 and moves in the front-back direction of the vehicle body 20. The mast 22 extends along the vertical direction (here, the direction Z) orthogonal to the front-back direction. The fork 24 is attached to the mast 22 so as to be movable in the direction Z. The fork 24 may be movable in a lateral direction of the vehicle body 20 (a direction intersecting with the vertical direction and the front-back direction) with respect to the mast 22. The fork 24 includes a pair of tines 24A and 24B. The tines 24A and 24B extend, from the mast 22, toward the front direction of the vehicle body 20. The tines 24A and 24B are arranged separated from each other in the lateral direction of the mast 22. In the front-back direction, a direction to a side of the mobile body 10 where the fork 24 is disposed and a direction to a side where the fork 24 is not disposed are referred to as a front direction and a back direction, respectively.

The sensors 26A detect at least one of the position and the orientation of a target object present in the periphery of the vehicle body 20. That is, it can be said that the sensor 26A detects at least one of the position of the target object relative to the mobile body 10 and the orientation of the target object relative to the mobile body 10. In the present embodiment, the sensor 26A is disposed at a leading end of each of the straddle legs 21 in the front direction, and at the vehicle body 20 on a back direction side. However, the positions at which the sensors 26A are disposed are not limited thereto, and the sensors 26A may be disposed at any positions, and the number of the sensors 26A disposed may be optional.

The sensor 26A is a sensor that emits a laser beam, for example. The sensor 26A emits the laser beam while performing scanning in one direction (here, the lateral direction), and detects the position and the orientation of the target object based on the reflected light of the laser beam emitted. That is, the sensor 26A is a so-called two-dimensional (2D) light detection and ranging (LiDAR). Note that the sensor 26A is not limited to the one described above and may be a sensor that detects the target object using any method, such as a so-called three-dimensional (3D)-LiDAR in which scanning is performed in multiple directions, or may be a so-called one dimensional (1D)-LiDAR in which no scanning is performed, or may be a camera.

The control device 28 controls the movement of the mobile body 10. The control device 28 will be described later.

Management Device

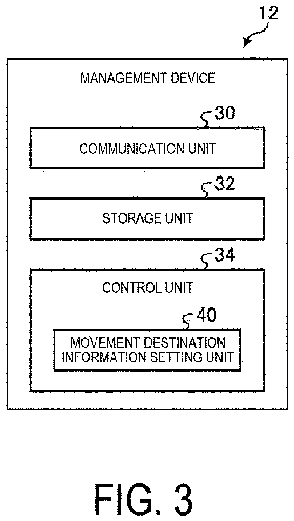

FIG. 3 is a schematic block diagram of a management device. The management device 12 is a system that manages physical distribution in the facility W. The management device 12 is a warehouse control system (WCS) or a warehouse management system (WMS) in the present embodiment, but is not limited to a WCS and a WMS, and may be any system including a backend system such as any other production management system. The management device 12 may be disposed at any position, and may be disposed in the facility W, or may be disposed at a separate position from the facility W so as to manage the facility W from the separate position. The management device 12 is a computer and includes a communication unit 30, a storage unit 32, and a control unit 34 as illustrated in FIG. 3.

The communication unit 30 is a module used by the control unit 34 to communicate with an external device such as the information processing device 14, and may include, for example, a Wi-Fi (registered trademark) module or an antenna. The communication method of the communication unit 30 is wireless communication in the present embodiment, but any communication method may be used. The storage unit 32 is a memory that stores various information such as computation contents of the control unit 34 and programs, and includes, for example, at least one of a primary storage device such as a random access memory (RAM) or a read only memory (ROM), and an external storage device such as a hard disk drive (HDD).

The control unit 34 is an arithmetic device and includes, for example, an arithmetic circuit such as a central processing unit (CPU). The control unit 34 includes a movement destination information setting unit 40. The control unit 34 reads a program (software) from the storage unit 32 and executes the program to implement the movement destination information setting unit 40 and perform the processing thereof. Note that the control unit 34 may execute such processing with a single CPU, or may include a plurality of CPUs and execute the processing with the plurality of CPUs. The movement destination information setting unit 40 may be implemented by a hardware circuit. The program for the control unit 34 stored in the storage unit 32 may be stored in a recording medium that is readable by the management device 12.

The movement destination information setting unit 40 sets movement destination information indicating a movement destination of the mobile body 10. The processing by the movement destination information setting unit 40 will be more specifically described later.

Note that the management device 12 may execute processing other than the setting of the movement destination information. For example, the management device 12 may also set information for controlling a mechanism other than the mobile body 10 disposed in the facility W (for example, an elevator and a door).

Information Processing Device

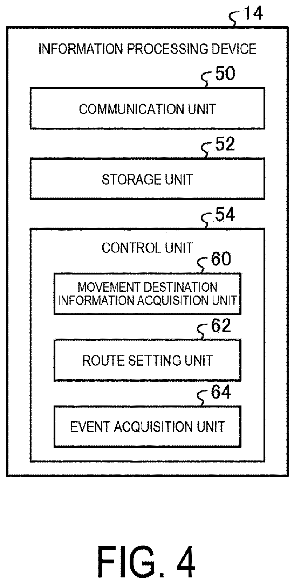

FIG. 4 is a schematic block diagram of the information processing device. The information processing device 14 is a device that is disposed in the facility W and processes information related to the movement of the mobile body 10. The information processing device 14 is, for example, a fleet control system (FCS), but is not limited thereto, and may be any device that processes information related to the movement of the mobile body 10. The information processing device 14 is a computer and includes a communication unit 50, a storage unit 52, and a control unit 54 as illustrated in FIG. 4. The communication unit 50 is a module used by the control unit 54 to communicate with an external device such as the management device 12 and the mobile body 10, and may include, for example, an antenna or a WiFi module. The communication method of the communication unit 50 is wireless communication in the present embodiment, but any communication method may be used. The storage unit 52 is a memory for storing various information such as computation contents of the control unit 54 and programs, and includes, for example, at least one of a primary storage device such as a RAM or a ROM, and an external storage device such as an HDD.

The control unit 54 is an arithmetic device and includes an arithmetic circuit such as a CPU, for example. The control unit 54 includes a movement destination information acquisition unit 60, a route setting unit 62, and an event acquisition unit 64. The control unit 54 reads programs (software) from the storage unit 52 and executes the programs to implement the movement destination information acquisition unit 60, the route setting unit 62, and the event acquisition unit 64 and perform the processing thereof. Note that the control unit 54 may execute such processing with a single CPU or may include a plurality of CPUs and execute the processing with the plurality of CPUs. At least a part of the movement destination information acquisition unit 60, the route setting unit 62, and the event acquisition unit 64 may be implemented by a hardware circuit. The program for the control unit 54 stored in the storage unit 52 may be stored in a recording medium that is readable by the information processing device 14.

The movement destination information acquisition unit 60 acquires the movement destination information, the route setting unit 62 sets a route of the mobile body 10 based on the movement destination information, and the event acquisition unit 64 acquires event information. Specific contents of the above-described processing will be described later.

Note that, in the present embodiment, the management device 12 and the information processing device 14 are separate devices, but may be an integrated device. That is, the management device 12 may have at least a part of the function of the information processing device 14, and the information processing device 14 may have at least a part of the function of the management device 12.

Control Device for Mobile Body

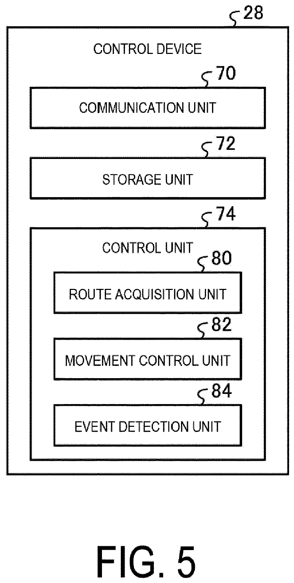

Next, the control device 28 for the mobile body 10 will be described. FIG. 5 is a schematic block diagram of a control device for the mobile body. The control device 28 is a device for controlling the mobile body 10. The control device 28 is a computer and includes a communication unit 70, a storage unit 72, and a control unit 74 as illustrated in FIG. 5. The communication unit 70 is a module used by the control unit 74 to communicate with an external device such as the information processing device 14, and may include, for example, an antenna or a WiFi module. The communication method of the communication unit 70 is wireless communication in the present embodiment, but any communication method may be used. The storage unit 72 is a memory for storing various information such as computation contents of the control unit 74 and programs, and includes, for example, at least one of a primary storage device such as a RAM or a ROM, and an external storage device such as an HDD.

The control unit 74 is an arithmetic device and includes an arithmetic circuit such as a CPU, for example. The control unit 74 includes a route acquisition unit 80, a movement control unit 82, and an event detection unit 84. The control unit 74 reads programs (software) from the storage unit 72 and executes the programs to implement the route acquisition unit 80, the movement control unit 82, and the event detection unit 84 and perform the processing thereof. Note that the control unit 74 may execute such processing with a single CPU or may include a plurality of CPUs and execute the processing with the plurality of CPUs. At least a part of the route acquisition unit 80, the movement control unit 82, and the event detection unit 84 may be implemented by a hardware circuit. In addition, the program for the control unit 74 stored in the storage unit 72 may be stored in a recording medium that is readable by the control device 28.

The route acquisition unit 80 acquires information indicating the route R of the mobile body 10, the movement control unit 82 controls a movement mechanism such as a drive unit or a steering device of the mobile body 10 so as to control the movement of the mobile body 10. The event detection unit 84 detects event information. Specific contents of the above-described processing will be described later.

Processing of Movement Control System

Next, the processing contents of the movement control system 1 will be described.

Setting of Movement Destination Information

The movement destination information setting unit 40 of the management device 12 sets movement destination information indicating a movement destination of the mobile body 10. The movement destination information includes information indicating the position of the movement destination of the mobile body 10. More specifically, in the present embodiment, the movement destination information setting unit 40 sets the movement destination information so as to include first position information (position information of a first position) and second position information (position information of a second position). The first position is a position which the mobile body 10 reaches first, and the second position is a position which the mobile body 10 reaches next to the first position. That is, in the example of the present embodiment, the first position is the position of a conveyance source of the target object P, and the second position is the position of a conveyance destination of the target object P. The movement destination information setting unit 40 may directly specify the position (coordinates) of the first position as the first position information. In addition, an identifier may be assigned to each waypoint A, and the movement destination information setting unit 40 may specify the identifier of a waypoint A corresponding to the first position as the first position information. The same applies to the second position information.

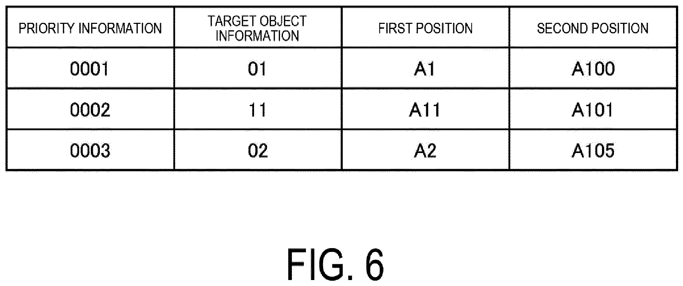

FIG. 6 is a table showing an example of movement destination information. In the present embodiment, the movement destination information setting unit 40 sets the movement destination information for each target object P to be conveyed. That is, the movement destination information setting unit 40 associates target object information indicating a target object P to be conveyed, the first position information that is the conveyance source of the target object P, and the second position information indicating the conveyance destination of the target object P with each other so as to set the movement destination information for each target object P. Note that, for example, an identifier may be assigned to each target object P, and information indicating the identifier may be used as the target object information. Further, as illustrated in FIG. 6, in the present embodiment, it is preferable for the movement destination information setting unit 40 to associate the target object information, the first position information, the second position information, and priority information with each other so as to set the movement destination information for each target object P. The priority information is information indicating a priority order for conveying a target object P among a group of movement destination information for each target object P. That is, for example, a target object P having the highest priority in the priority information is to be conveyed first. FIG. 6 shows an example in which pieces of movement destination information are set as follows: movement destination information in which the priority is 0001 (first), the target object P is 01, the first position is A1, and the second position is A100; movement destination information in which the priority is 0002 (second), the target object P is 11, the first position is A11, and the second position is A101; movement destination information in which the priority is 0003 (third), the target object P is 02, the first position is A2, and the second position is A105. However, FIG. 6 is only an example, and the movement destination information may be optionally set in accordance with an order status or the like.

In addition, the movement destination information setting unit 40 may set the movement destination information so as to include designation information for designating a mobile body 10 to move from the first position to the second position (a mobile body 10 to convey the target object P). That is, in the example of the present embodiment, the movement destination information setting unit 40 may associate the target object information, the first position information, the second position information, the priority information, and the designation information with each other so as to set the movement destination information for each target object P. In that case, for example, an identifier may be assigned to each mobile body 10, and information indicating the identifier may be used as the designation information.

The movement destination information setting unit 40 may set the movement destination information in any method. For example, the movement destination information setting unit 40 may acquire an order information indicating a target object P to be conveyed, a conveyance source, and a conveyance destination, and set the movement destination information based on the order information. The movement destination information setting unit 40 transmits the set movement destination information to the information processing device 14 via the communication unit 30.

Acquisition of Movement Destination Information

The movement destination information acquisition unit 60 of the information processing device 14 acquires the movement destination information from the management device 12 via the communication unit 50.

Setting of Route

The route setting unit 62 of the information processing device 14 sets a route R to a movement destination for the mobile body 10 based on the movement destination information. In the present embodiment, the route setting unit 62 sets, as the route R of the mobile body 10, a first route to the first position (conveyance source) indicated by the first position information from an initial position at which the mobile body 10 is located immediately before starting to move to the first position, and a second route to the second position (conveyance destination) indicated by the second position information from the first position. That is, the route setting unit 62 sets the route R of the mobile body 10 such that respective waypoints A from the initial position to the first position are set as the first route, and respective waypoints A from the first position to the second position are set as the second route. In the example of FIG. 1, the movement destination information indicates that the first position is a waypoint Ab and the second position is a waypoint Ac, and the route setting unit 62 sets, as the route R of the mobile body 10, the first route passing through respective waypoints A from the waypoint Aa, which is the initial position of the mobile body 10 selected, to the waypoint Ab, and the second route passing through respective waypoints A from the waypoint Ab to the waypoint Ac.

When a plurality of mobile bodies 10 are deployed in the facility W, the route setting unit 62 selects a mobile body 10 to convey a target object P and set a route R of the selected mobile body 10. Also, when the movement destination information is set for a plurality of target objects P, the route setting unit 62 sets a route R of a mobile body 10 for each target object P. That is, the route setting unit 62 selects, for each target object P, a mobile body 10 to convey the target object P, and sets the route of the selected mobile body 10. For example, when the movement destination information is as shown in FIG. 6, the route setting unit 62 selects a mobile body 10 to convey a target object O1, and sets a route from the initial position of the mobile body 10, through A1 as the first position, to A100 as the second position. Descriptions of mobile bodies selected for other target objects illustrated in FIG. 6 and the routes (waypoints) thereof are the same as those above, and thus are omitted. Note that the route setting unit 62 may select a mobile body 10 in any manner, and may select a mobile body 10 for each target object P such that the time until the completion of the conveyance of all the target objects P is the shortest, for example. In the case where a target mobile body 10 has been designated as the designation information in the movement destination information, it is only necessary to select the mobile body 10 designated in the designation information.

The route setting unit 62 also sets, in addition to the route R, a reserved time period during which the selected mobile body 10 passes through the route R (waypoints A). In this case, other mobile bodies 10 are prohibited from passing through the route R during the reserved time period. That is, the selected mobile body 10 occupies the set route R during the reserved time period. In setting the route R for each of a plurality of target objects P, the route setting unit 62 sets a mobile body 10, a route R (waypoints A), and a reserved time period for each of the target objects P such that, in the reserved time period of one mobile body 10, the same waypoints A as those for the one mobile body 10 are not set for other mobile bodies (such that there is no overlapping of reserved time periods) and such that no deadlock occurs even when there is no overlapping of reserved time periods. Further, the route setting unit 62 may set a route R and a reserved time period also based on the priority information in the movement destination information. That is, the route setting unit 62 sets a mobile body 10, a route R, and a reserved time period for each of the target objects P such that there is no overlapping of reserved time periods and that the conveyance of a target object P having a higher priority is completed sooner. Note that a route R includes a plurality of waypoints A, and thus the route setting unit 62 may set a reserved time period for each of the waypoints A included in the route R.

Note that the deadlock refers to a phenomenon in which each of a plurality of running programs or the like mutually waits for a result of other programs, and remains in a standby state and does not operate. In the present embodiment, the deadlock may refer to a phenomenon in which the mobile bodies 10 remain stopped if there is a possibility that the mobile bodies 10 will collide with each other when the mobile bodies 10 keep moving along the current routes, and if it is impossible to set avoidance routes toward travel direction sides.

The route setting unit 62 transmits information on the set route R to the mobile body 10 to which the set route R is assigned. The route setting unit 62 transmits information indicating respective waypoints A through which the route R passes as the information on the route R. For example, the route setting unit 62 may transmit, to the mobile body 10, position (coordinate) information of respective waypoints A through which the route R passes as the information on the route R, or may transmit, to the mobile body 10, information indicating the identifiers of respective waypoints A through which the route R passes as the information on the route R. Further, in the present embodiment, the route setting unit 62 also transmits, in addition to the information on the route R, information on the reserved time period, that is, information indicating the reserved time period during which the mobile body 10 passes through the route (waypoints A) to the mobile body 10.

Movement of Mobile Body

The route acquisition unit 80 of a mobile body 10 acquires information on the route R set for the mobile body 10 from the information processing device 14. The movement control unit 82 of the mobile body 10 causes the mobile body 10 to move along the route R acquired. In the present embodiment, the route acquisition unit 80 also acquires the information on the reserved time period together with the information on the route R. The movement control unit 82 causes the mobile body 10 to pass through each waypoint A through which the route R passes during the reserved time period set for each waypoint A. The movement control unit 82 causes the mobile body 10 to move so as to pass through the respective waypoints A on the route R by successively grasping the position information of the mobile body 10. The method of acquiring the position information of the mobile body 10 is optional. In the present embodiment, for example, a detection body (not illustrated) is disposed in the facility W, and the movement control unit 82 acquires information on the position and the orientation of the mobile body 10 based on the detection of the detection body. Specifically, the mobile body 10 irradiates the detection body with a laser beam, receives light of the laser beam reflected from the detection body, and detects the position and the orientation of the mobile body 10 in the facility W. The method of acquiring the information on the position and the orientation of the mobile body 10 is not limited to using a detection body, and simultaneous localization and mapping (SLAM) may be used, for example.

In the example of FIG. 1, the movement control unit 82 causes the mobile body 10 to move from the waypoint Aa, which is the initial position, to the waypoint Ab, which is the first position, so as to pass through each waypoint A from the waypoint Aa to the waypoint Ab. When the mobile body 10 reaches the waypoint Ab, the movement control unit 82 controls the fork 24 to insert the fork 24 into the opening Pb of the target object P placed in the placement area AR1 facing the waypoint Ab so as to pick up (load) the target object P. In this case, the movement control unit 82 may cause the sensor 26A to detect the position and the orientation of the target object P at the waypoint Ab or at any position before reaching the waypoint Ab. Then, the movement control unit 82 may set an approach route to the target object P based on the position and the orientation of the target object P, and approach the target object P along the approach route to pick up the target object P. That is, in that case, the movement control unit 82 may set a new approach route that allows a predetermined position and a predetermined orientation with respect to the position and the orientation of the target object P detected (the position and the orientation at which the mobile body 10 can pick up the target object P), and approach the target object P along the approach route. Alternatively, for example, the movement control unit 82 may cause the mobile body 10 to approach the target object P by performing feedback control (direct feedback control) based on the detection result of the position and the orientation of the target object P and the detection result of the position and the orientation of the mobile body 10. In that case, switching to the direct feedback control may be performed during the approach along a route based on the position and the orientation of the target object P.

After the mobile body 10 picks up the target object P, the movement control unit 82 causes the mobile body 10 to return to the waypoint Ab and then move to the waypoint Ac, which is the second position, so as to pass through each waypoint A from the waypoint Ab to the waypoint Ac. When the mobile body 10 reaches the waypoint Ac, the movement control unit 82 controls the fork 24 to drop (unload) the target object P in the placement area AR1 facing the waypoint Ac.

After the mobile body 10 drops the target object P, the movement control unit 82 causes the mobile body 10 to return to the waypoint Ac. When a next route R in which the waypoint Ac is the initial position is set in the information acquired by the route acquisition unit 80, the movement control unit 82 causes the mobile body 10 to move along the next route R.

As described above, each of the mobile bodies 10 deployed in the facility W moves along the set route R so as to load, convey, and unload a target object P. Hereinafter, a series of operations of a mobile body 10 to move along the route R, and load, convey, and unload a target object P is referred to as a work as appropriate.

Detection of Event Information

Here, an event unexpected at the time of setting a route R may occur during the actual movements of the mobile bodies 10. In the present embodiment, the event detection unit 84 of a mobile body 10 detects event information indicating that an event unexpected at the time of setting a route R has occurred in the mobile body 10. Hereinafter, the event unexpected at the time of setting a route R is simply referred to as an "event". The event information may include information indicating that an event has occurred and information indicating the type of event. The event detection unit 84 transmits the detected event information to the information processing device 14.

Setting of Next Route

The event acquisition unit 64 of the information processing device 14 acquires the event information detected by the event detection unit 84 of a mobile body 10 from the mobile body 10. When the event acquisition unit 64 acquires the event information, the route setting unit 62 of the information processing device 14 sets a next route based on the event information. The route setting unit 62 sets a route to a movement destination set based on the event information as the next route. The route setting unit 62 transmits the next route set based on the event information to the mobile body 10. When acquiring the next route, the movement control unit 82 of the mobile body 10 causes the mobile body 10 to move along the next route. Note that, in the present embodiment, the mobile body 10 detects the event information, but the subject that detects the event information is not limited to the mobile body 10, and for example, the information processing device 14 may detect the event information.

Here, when an event unexpected at the time of setting a route R occurs, there is a possibility that the works of the respective mobile bodies 10 cannot be appropriately continued. Thus, for example, it is conceivable that after all the mobile bodies are stopped, the event is manually resolved and then the works are resumed. However, when such measures are taken, it takes time to complete the works of the mobile bodies, and thus the operating ratio is reduced. In contrast, when an event unexpected at the time of setting a route R occurs, the information processing device 14 sets a next route based on the event information. Accordingly, since the next route responding to the event can be set and the work can be continued, the reduction in the operating ratio of the mobile bodies can be suppressed.

Example of Setting Next Route

Hereinafter, examples of setting a next route for each type of event will be described. In the present embodiment, the processes in the examples below may be executed in part or in whole. That is, in the present embodiment, at least one process among the examples below may be executed.

Example of Detecting Completion of All Assigned Works

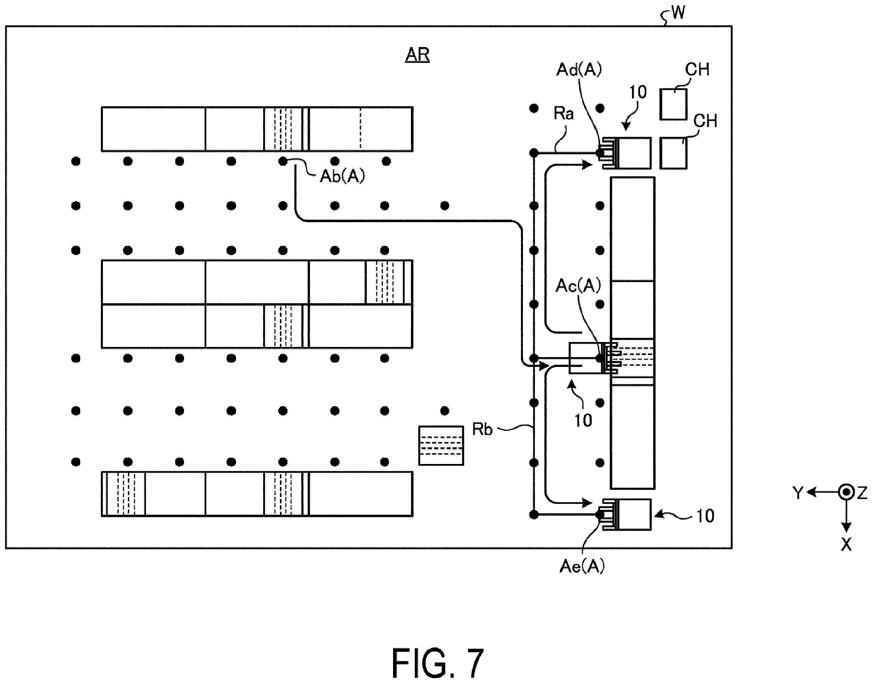

FIG. 7 is a schematic view illustrating an example of setting a next route. For example, completion of all works assigned to a mobile body 10, in other words, completion of the movement of the mobile body 10 may be defined as an event. Here, the completion of all works assigned to a mobile body 10 (the completion of the movement) means a state in which the mobile body 10 has completed the movement along the route R and no next route R (work) has been set. That is, for example, the example of FIG. 7 illustrates a state in which the mobile body 10 has completed the movement from a waypoint Ab as the first position to a waypoint Ac as the second position and the dropping of a target object P, and remains at the waypoint Ac. Then, in a state in which the mobile body 10 has dropped the target object P and remains at the waypoint Ac, if a next work whose initial position is the waypoint Ac is not set, that is, if all the works assigned to the mobile body 10 in the movement destination information have been completed, it can be determined that the movement has been completed. In addition, for example, it may be determined that the movement has been completed if the mobile body 10 has completed a work and the time from the completion time of the work to the start time of a next assigned work is equal to or longer than a predetermined time. The predetermined time may be set optionally. The event acquisition unit 64 may detect an event indicating the completion of the movement as the event information in any method. For example, the event detection unit 84 may detect, as the event information indicating that the movement has been completed, a fact that it is detected that the mobile body 10 has reached the second position (the waypoint Ab in the example of FIG. 7), it is detected that the target object P has been dropped by controlling the fork 26, and then it is detected that the mobile body 10 remains at the second position.

The event detection unit 84 of the mobile body 10 transmits the event information indicating that the movement has been completed to the information processing device 14, and the event acquisition unit 64 of the information processing device 14 acquires the event information indicating that the movement has been completed. When the event information indicating that the movement has been completed is acquired, the route setting unit 62 of the information processing device 14 sets a position different from the movement destination of the mobile body 10 as an updated movement destination and sets a route to the updated movement destination as an updated route which is the next route. The movement destination here refers to a position at which the movement is completed, in other words, refers to the second position of the route R (the waypoint Ab in the example of FIG. 7). That is, in the present example, a position different from the second position (the waypoint Ab in the example of FIG. 7) of the route R is set as an updated movement destination. It can be said that the route setting unit 62 sets, as an updated route, a route from a position at which the movement of the mobile body 10 is completed to an updated movement destination different from the position.

The route setting unit 62 sets, as an updated movement destination, a position not overlapping with the route R (waypoints A) of another mobile body 10 scheduled to move from this point onward. For example, in the area AR, a candidate position (waypoint A), which is a candidate for an updated movement destination, is set at a position not overlapping with a route connecting waypoints A facing respective placement areas AR1 (route used for conveyance). For example, a waypoint A serving as a charging point (in the example of FIG. 7, a waypoint Ad at which a charger CH is placed) or a waypoint A serving as a waiting point (in the example of FIG. 7, a waypoint Ae) is set as a candidate position. Thus, the route setting unit 62 sets the waypoint A serving as a charging point or the waypoint A serving as a waiting point as an updated movement destination, and sets a route passing through each waypoint A from the position at which the movement is completed to the updated movement destination as an updated route. Note that the waypoint A serving as a charging point or a waiting point may be set at any position that does not overlap with a route connecting the waypoints A facing the respective placement areas AR1 (route used for conveyance).

A method of setting an updated movement destination by the route setting unit 62 is optional. For example, a candidate position closest to the position at which the movement is completed may be set as an updated movement destination from among a plurality of candidate positions. Alternatively, for example, the route setting unit 62 may set an updated movement destination based on a charge amount of a mobile body 10. The charge amount (state of charge) here refers to the remaining amount of stored electric power of the mobile body 10. In this case, for example, the event detection unit 84 of the mobile body 10 also transmits information indicating the charge amount of the mobile body 10 at the time of completion of the movement to the information processing device 14 as the event information. When the event information indicating the completion of movement and the charge amount is acquired, the route setting unit 62 may set an updated movement destination based on the charge amount. For example, when the charge amount of the mobile body 10 at the time of completion of the movement is equal to or less than a predetermined value, the route setting unit 62 may set a waypoint A serving as a charging point as an updated movement destination. In that case, the route setting unit 62 may select, from among a plurality of waypoints A serving as charging points, a waypoint A closest to the position at which the movement is completed as the updated movement destination. The predetermined value here may be set optionally.

When the charge amount of the mobile body 10 at the time of completion of the movement is larger than a predetermined value, the route setting unit 62 may set a waypoint A serving as a waiting point as an updated movement destination. In that case, the route setting unit 62 may select, from among a plurality of waypoints A serving as waiting points, a waypoint A closest to the position at which the movement is completed as the updated movement destination. Alternatively, for example, the route setting unit 62 may calculate a movement distance and the number of overlapping waypoints for each of a plurality of waypoints A serving as waiting points, and select an updated movement destination from among the plurality of waypoints A serving as waiting points based on the movement distance and the number of overlapping waypoints. The movement distance refers to a distance from the position at which the movement is completed to such a waypoint A. The number of overlapping waypoints refers to the number of waypoints A set as waypoints A through which the other mobile bodies 10 will pass from this point onward among waypoints A from the position at which the movement is completed to such a waypoint A. For example, the route setting unit 62 may set, as an updated movement destination, a waypoint A for which a value obtained by adding the movement distance and the number of overlapping waypoints is the smallest, or may set, as an updated movement destination, a waypoint A for which a value N represented by the following expression (1) is the smallest.

$$N = \alpha \cdot WP + WL \quad (1)$$

Where, $\alpha$ is an optionally set constant, WP indicates the number of overlapping waypoints, and WL indicates the movement distance.

The route setting unit 62 transmits information on the updated route set in this way (for example, information indicating the waypoints A from the position at which the movement is completed to the updated movement destination) to the mobile body 10, and the route acquisition unit 80 of the mobile body 10 acquires the information on the updated route. The movement control unit 82 of the mobile body 10 causes the mobile body 10 to pass through the updated route indicated by the information on the updated route. For example, the example of FIG. 7 illustrates an example in which a mobile body 10 moves along a route Ra (updated route) from a waypoint Ac, which is the position at which the movement is completed, to a waypoint Ad which is a charging point. The mobile body 10 that has reached the waypoint Ad is charged by the charger CH provided there. FIG. 7 illustrates another example in which a mobile body 10 moves along a route Rb (updated route) from a waypoint Ac, which is the position at which the movement is completed, to a waypoint Ae which is a waiting point. The mobile body 10 that has reached the waypoint Ae waits at the waypoint Ae.

The route setting unit 62 also sets a reserved time period for the updated route and transmits the reserved time period together with the information on the updated route to the mobile body 10. The movement control unit 82 of the mobile body 10 causes the mobile body 10 to move so as to pass through the updated route during the reserved time period. Preferably, the route setting unit 62 sets a reserved time period for an updated route so as not to change subsequent reserved time periods of other mobile bodies 10. That is, when any waypoint A included in the updated route overlaps with a waypoint A of the route R of another mobile body 10, the route setting unit 62 sets a reserved time period so as not to overlap with the reserved time period of the waypoint A of another mobile body 10. In this way, by not changing the reserved time period of the waypoint A of another mobile body 10, it is possible to lower the priority of the updated route and give priority to the movement of another mobile body 10. In other examples described below, a reserved time period may be set in a similar way, and a mobile body 10 may move so as to pass through an updated route during the reserved time period.

As described above, in the present example, when the movement of a mobile body 10 is completed, the mobile body 10 is caused to move to an updated movement destination without staying at the position at which the movement is completed. Accordingly, it is possible to prevent the mobile body 10 that has completed the movement from staying on the route R of another mobile body 10 and interfering with the movement of another mobile body 10, and to suppress the reduction in the operating ratio of the mobile bodies 10.

Example of Detecting Charge Amount

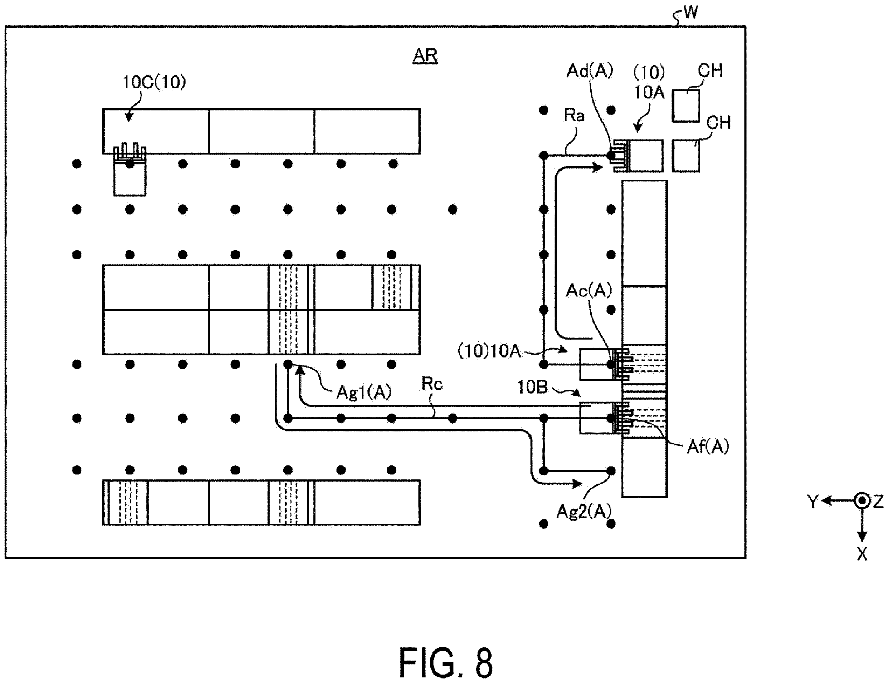

FIG. 8 is a schematic view illustrating an example of setting a next route. For example, the charge amount of a mobile body 10 may be defined as an event. In that case, the event detection unit 84 of the mobile body 10 detects event information indicating the charge amount of the mobile body 10. The event detection unit 84 sequentially detects the charge amount of the mobile body 10. The event detection unit 84 transmits the event information indicating the charge amount of the mobile body 10 to the information processing device 14, and the event acquisition unit 64 of the information processing device 14 acquires the event information indicating the charge amount of the mobile body 10.

When the acquired charge amount of the mobile body 10 is equal to or less than a threshold value, the route setting unit 62 of the information processing device 14 sets a waypoint A serving as a charging point as an updated movement destination, and sets a route to the charging point, which has been set as the updated movement destination, as an updated route that is a next route. The threshold value here may be set optionally. In this case, for example, the route setting unit 62 may select, from among a plurality of waypoints A serving as charging points, a waypoint A closest to a position of a movement source of the mobile body 10 as the updated movement destination. The event detection unit 84 of the mobile body 10 may sequentially transmit the charge amount of the mobile body 10 to the information processing device 14, or may transmit information on the charge amount of the mobile body 10 as the event information when the charge amount of the mobile body 10 becomes equal to or less than the threshold value.

The route setting unit 62 transmits information on the updated route set in this way to the mobile body 10, and the route acquisition unit 80 of the mobile body 10 acquires the information on the updated route. The movement control unit 82 of the mobile body 10 causes the mobile body 10 to move so as to path through the updated route indicated by the information on the updated route. The mobile body 10 that has reached the charging point along the updated route is charged by the charger CH provided there. When the mobile body 10 is performing a work (moving along the route R, loading or unloading the target object P, or the like) at the timing when the charge amount becomes equal to or less than the threshold value, the movement control unit 82 causes the mobile body 10 to move along the updated route after the work is completed. That is, in this case, the route setting unit 62 sets a route from the second position (conveyance destination) at which the mobile body 10 is scheduled to arrive to the charging point as the updated route. Then, after the mobile body 10 drops a target object P and is located at the second position (conveyance destination) of the current route R, the movement control unit 82 causes the mobile body 10 to move from the second position to the charging point along the updated route.

However, the present disclosure is not limited thereto, and, for example, when the mobile body 10 is performing a work at the timing of acquisition of the updated route, the movement control unit 82 may cause the mobile body 10 to interrupt the work and start moving along the updated route. In that case, the updated route is set as a route from the current position of the mobile body 10 to the charging point set as the updated movement destination.

When a next work is assigned to the mobile body 10 whose charge amount is equal to or less than the threshold value, the route setting unit 62 assigns the work to another mobile body 10. In other words, the route setting unit 62 of the information processing device 14 sets, to a mobile body 10 other than a mobile body 10 whose charge amount is less than the threshold value, a route to a scheduled next movement destination of the mobile body 10 whose charge amount is less than the threshold value as a next route of the mobile body 10. In the example of FIG. 8, an updated route (route Ra) from a waypoint Ac to a waypoint Ad, which is a charging point, is set to a mobile body 10A (first mobile body) whose charge amount is less than the threshold value, where the waypoint Ac is the second position of the route R along which the movement has been completed. The mobile body 10A moves from the waypoint Ac to the waypoint Ad and is charged. In addition, in the example of FIG. 8, a work (route) in which a waypoint Ag1 is the first position and a waypoint Ag2 is the second position is also set for the mobile body 10A after the work in which the waypoint Ac is the second position. In this case, the route setting unit 62 assigns the work in which the waypoint Ag1 is the first position and the waypoint Ag2 is the second position to a mobile body 10B. In this case, the route setting unit 62 sets a route Rc from a waypoint Af (initial position of the mobile body 10B) through the waypoint Ag1 (first position) to the waypoint Ag2 (the second position) as a next route of the mobile body 10B, and transmits the route Rc to the mobile body 10B. After reaching the waypoint Af, the mobile body 10B starts moving along the route Rc so as to pick up a target object P at the waypoint Ag1 and convey the target object P to the waypoint Ag2.

When there is a plurality of mobile bodies 10 to which a work of the mobile body 10A can be assigned, the route setting unit 62 select, of the plurality of mobile bodies 10, a mobile body 10 having shortest time to reach a scheduled movement destination of the mobile body 10A (the first position of the next route R of the mobile body 10A) from the initial position (the movement destination of the mobile body 10) as a mobile body to which the work of the mobile body 10A is assigned. That is, in the example of FIG. 8, since the time to reach the waypoint Ag1 of the mobile body 10B is shorter than that of the mobile body 10C, the work of the mobile body 10A is assigned to the mobile body 10B. The time to reach here can be calculated based on, for example, the distance from the initial position to the scheduled movement destination of the mobile body 10A.

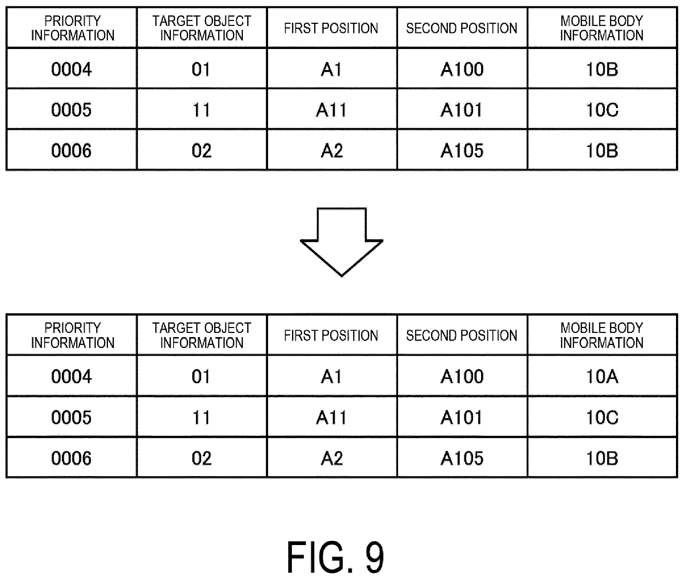

FIG. 9 is a schematic view for describing an example of changes in work assignment after charging is completed. When the charge amount of the mobile body 10A that has moved to the charging point and is being charged becomes equal to or larger than a predetermined value higher than the threshold value described above, the route setting unit 62 assigns a work to the mobile body 10A and sets a route R from the charging point. The predetermined value here may be any value higher than the threshold value described above. As described above, the route setting unit 62 has assigned a subsequent work after the mobile body 10A starts moving to the charging point to a mobile body 10 other than the mobile body 10A. On the other hand, when the mobile body 10A is charged to a sufficient charge amount (equal to or larger than the predetermined value) and can return to a work, a subsequent work is also assigned to the mobile body 10A. That is, in the example of FIG. 9, as shown in the upper table, while the mobile body 10A is being charged, subsequent works (works of conveying the target objects 01, 11, and 02) are assigned to the mobile bodies 10B and 10C. On the other hand, when the charge amount of the mobile body 10A becomes equal to or larger than the predetermined value, the assignment of the subsequent works is updated as shown in the lower table, and a work is also assigned to the mobile body 10A. In the example of FIG. 9, the route setting unit 62 sets a next route of the mobile body 10A such that the charging point is the initial position, A1 is the first position, and A100 is the second position, and the mobile body 10A moves from the charging point along the next route.

As described above, in the present example, when the charge amount of a mobile body 10 falls to a low level, the mobile body 10 is caused to move to the charging point without performing the next work. Accordingly, the mobile body 10 can be charged quickly, and the reduction in the operating ratio can be suppressed. Further, in the present example, a work of the mobile body 10 whose charge amount falls to a low level is assigned to another mobile body 10. Thus, it is possible to prevent a delay in the work of the mobile body 10 whose charge amount falls to a low level and to suppress the reduction in the operating ratio.

Example of Detecting Failure

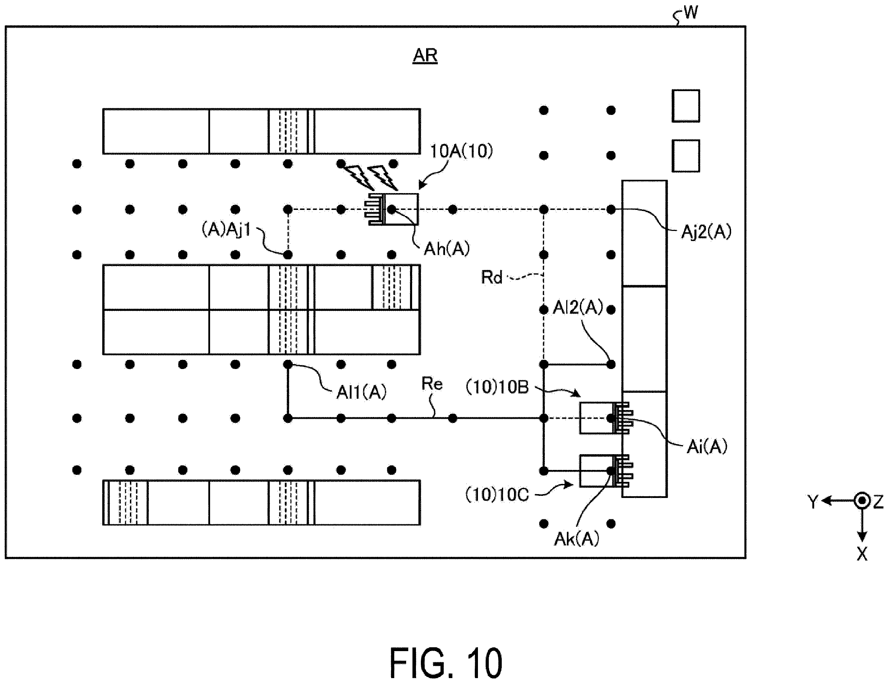

FIG. 10 is a schematic view illustrating an example of setting a next route. For example, a failure of a mobile body 10 may be defined as an event. In that case, the event detection unit 84 of the mobile body 10 detects event information indicating a failure of the mobile body 10. The failure here refers to an event in which the mobile body 10 cannot move from the current position. The event detection unit 84 transmits the event information indicating the failure of the mobile body 10 to the information processing device 14, and the event acquisition unit 64 of the information processing device 14 acquires the event information indicating the failure of the mobile body 10. The event acquisition unit 64 may acquire the event information indicating the failure in any method. For example, the event detection unit 84 of the mobile body 10 may detect that a failure of the mobile body 10 has occurred and transmit a signal indicating that the failure has occurred to the information processing device 14, and thereby the event acquisition unit 64 may acquire the event information. Alternatively, for example, when the information processing device 14 sequentially communicates with the mobile body 10, the event acquisition unit 64 may acquire, as the event information indicating the failure, a state in which the communication with the mobile body 10 cannot be established for a predetermined time or longer (a signal from the mobile body 10 cannot be received for a predetermined time or longer). Alternatively, for example, since the information processing device 14 sequentially acquires the position information of the mobile body 10, the event acquisition unit 64 may acquire, as the event information indicating the failure, the position information of the mobile body 10 indicating that the position of the mobile body 10 does not move for a predetermined time or longer (the movement amount of the position of the mobile body 10 remains at a predetermined value or less for a predetermined time or longer).

When the event information indicating the failure of the mobile body 10 is acquired, the route setting unit 62 of the information processing device 14 grasps the current position of the failed mobile body 10 based on the position information of the failed mobile body 10. When the mobile body 10 cannot transmit the position information due to the failure, the route setting unit 62 may consider the position information of the mobile body 10 transmitted for the last time before the failure as the current position of the failed mobile body 10. Then, the route setting unit 62 sets a nearby position within a predetermined distance from the current position of the failed mobile body 10 to be impassable. In other words, the route setting unit 62 reserves a waypoint A located within a predetermined distance from the current position of the failed mobile body 10 so that other mobile bodies 10 cannot reserve that waypoint A. The predetermined distance here may be set optionally. Then, the route setting unit 62 sets an updated route of each of the other mobile bodies 10 so that the next route (updated route) of each of the other mobile bodies 10 does not pass through the waypoint A of the nearby position. In this case, the route setting unit 62 sets a route that reaches the first position and the second position of the current work without passing through the waypoint A of the nearby position as the updated route so that each of the other mobile bodies 10 can continue the current work. For the mobile bodies 10 to which a route R not passing through the waypoint A of the nearby position is set, the route setting unit 62 maintains the original route R without setting an updated route (without updating the route). On the other hand, for the mobile bodies 10 to which a route R passing through the waypoint A of the nearby position is set, the route setting unit 62 stops the movement of the mobile body 10 and sets an updated route. In addition, the work performed by the mobile body 10A immediately before the failure is assigned to another mobile body 10. That is, the route setting unit 62 sets, to another mobile body 10, a route R passing through the first position and the second position of the work performed by the mobile body 10A immediately before the failure.

The example of FIG. 10 illustrates a case in which the mobile body 10A has failed at a waypoint Ah. In this case, the information processing device 14 acquires event information indicating that the failure of the mobile body 10A has occurred and position information indicating that the current position of the mobile body 10A is the waypoint Ah. The information processing device 14 causes the route setting unit 62 to set a waypoint A located within a predetermined distance from the waypoint Ah to be impassable, and to update the routes of the mobile bodies 10 other than the mobile body 10A. In the example of FIG. 10, a route Rd set for the mobile body 10B passes through the waypoint A located within a predetermined distance from the waypoint Ah. Thus, the route setting unit 62 sets, to the mobile body 10B, an updated route that reaches the first position (waypoint Aj 1) and the second position (waypoint Aj2) of the route Rd without passing through the waypoint A located within a predetermined distance from the waypoint Ah, and transmits the updated route to the mobile body 10B. The mobile body 10B stops moving along the current route Rd and moves along the set updated route. On the other hand, a route Re set for the mobile body 10C is a route that reaches the first position (waypoint Al1) and the second position (waypoint Al2), and does not pass through the waypoint A located within a predetermined distance from the waypoint Ah. Thus, the route setting unit 62 maintains the route Re instead of setting an updated route for the mobile body 10C. The mobile body 10C moves along the route Re.

As described above, in the present example, when the mobile body 10 fails, the routes of the other mobile bodies 10 are updated so as not to pass through the nearby position. Accordingly, it is possible to prevent the works of the other mobile bodies 10 from being interrupted by the failed mobile body 10, and suppress the reduction in the operating ratio.

Example of Detecting Obstacle

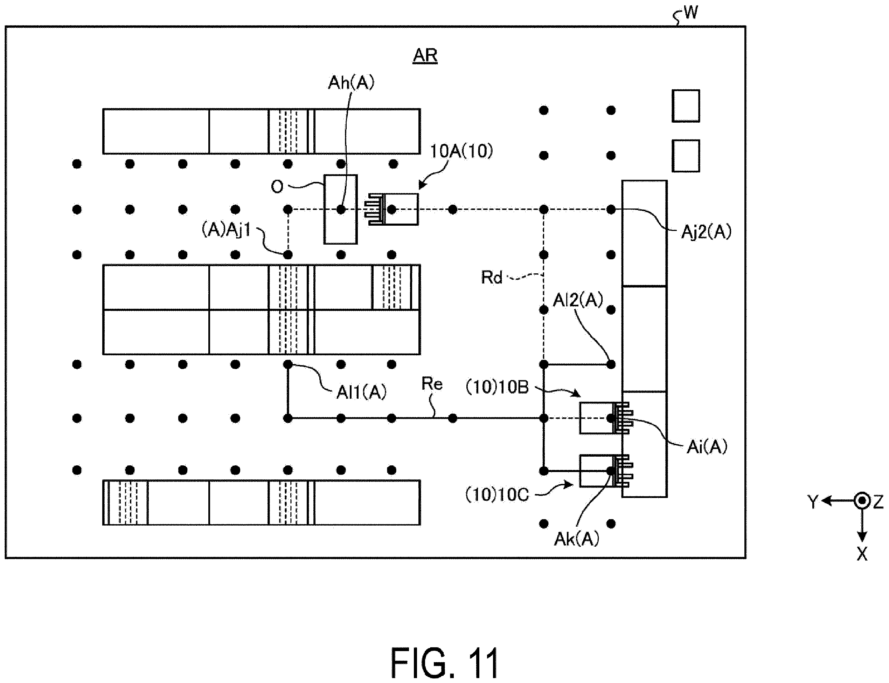

FIG. 11 is a schematic view illustrating an example of setting a next route. For example, the presence of an obstacle on the route R of a mobile body 10 may be defined as an event. In that case, the event detection unit 84 of the mobile body 10 detects the obstacle present on the route R of the mobile body 10 as event information. The mobile body 10 moves while detecting the surroundings of the mobile body 10, for example, by using the sensor 26A. The event detection unit 84 finds out, as the event information, that the obstacle present on the route R of the mobile body 10 has been detected by the sensor 26A.

The route setting unit 62 of the information processing device 14 acquires the event information indicating that the obstacle is present on the route R and the position information of the obstacle from the mobile body 10. Then, the route setting unit 62 sets a nearby position within a predetermined distance from the position of the obstacle to be impassable. In other words, the route setting unit 62 reserves a waypoint A located within a predetermined distance from the position of the obstacle so that mobile bodies 10 cannot reserve that waypoint A. The predetermined distance here may be set optionally. Then, the route setting unit 62 sets an updated route so that the next route (updated route) of each of the mobile bodies 10 does not pass through the waypoint A of the nearby position. In this case, the route setting unit 62 sets a route that reaches the first position and the second position of the current work without passing through the waypoint A of the nearby position as the updated route so that each of the mobile bodies 10 can continue the current work. For the mobile bodies 10 to which a route R not passing through the waypoint A of the nearby position is set, the route setting unit 62 maintains the original route R without setting an updated route. On the other hand, for the mobile bodies 10 to which a route R passing through the waypoint A of the nearby position is set, the route setting unit 62 stops the movement of the mobile body 10 and sets an updated route.

The example of FIG. 11 illustrates a case in which the mobile body 10A has detected an obstacle O at a waypoint Ah on the route R of the mobile body 10A. In this case, the information processing device 14 acquires the event information indicating that the obstacle is present on the route R and the position information of the obstacle O indicating that the obstacle O is present at the waypoint Ah. The information processing device 14 causes the route setting unit 62 to set a waypoint A located within a predetermined distance from the waypoint Ah to be impassable, and to update the routes of the respective mobile bodies 10. In the example of FIG. 10, since the routes set for the mobile bodies 10A and 10B pass through the waypoint A located within a predetermined distance from the waypoint Ah, the route setting unit 62 sets, to the mobile bodies 10A and 10B, an updated route that reaches the first position and the second position of the current work without passing through the waypoint A located within a predetermined distance from the waypoint Ah, and transmits the updated route to each of the mobile bodies 10A and 10B. Each of the mobile bodies 10A and 10B stops moving along the current route and moves along the set updated route. On the other hand, since the route Re set for the mobile body 10C does not pass through the waypoint A located within a predetermined distance from the waypoint Ah, the route setting unit 62 maintains the route Re without setting an updated route for the mobile body 10C. The mobile body 10C moves along the route Re.

As described above, in the present example, when the obstacle is present on the route, the routes of the mobile bodies 10 are updated so as not to pass through the nearby position. Accordingly, it is possible to prevent the works of the mobile bodies 10 from being interrupted by the obstacle, and suppress the reduction in the operating ratio.

Example of Detecting Deadlock

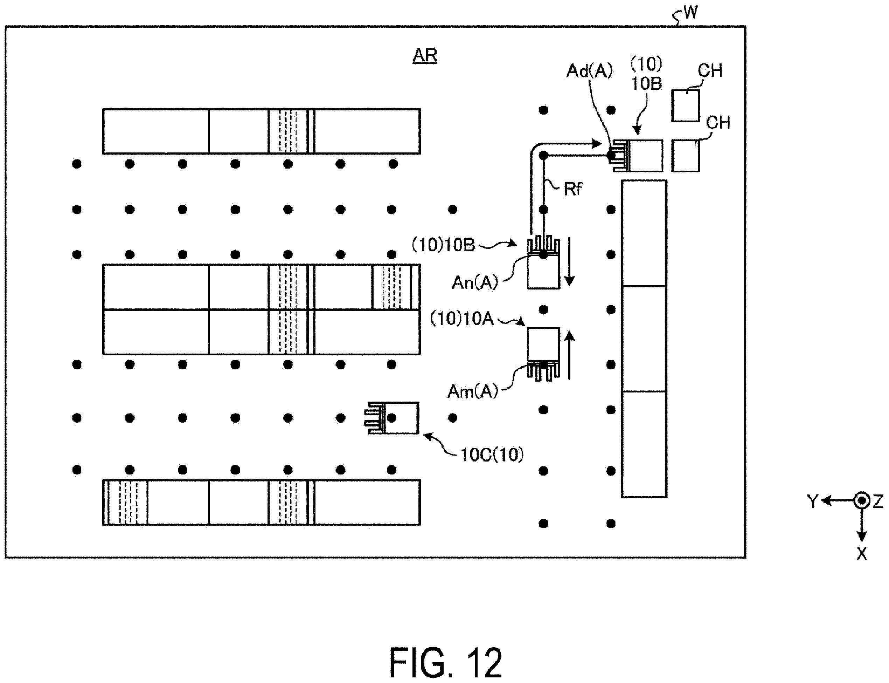

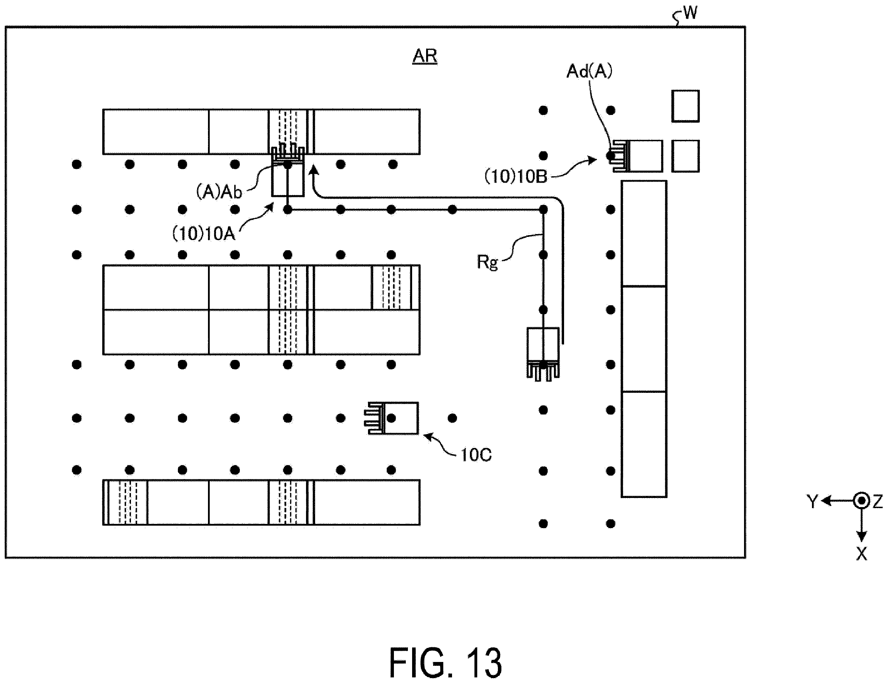

Each of FIGS. 12 and 13 is a schematic view illustrating an example of setting a next route. The route of each mobile body 10 is set so as not to cause a deadlock. However, for example, a deadlock may occur when a delay occurs or an obstacle or a failure is detected. Thus, in the present example, the occurrence of a deadlock may be defined as an event. In that case, the event detection unit 84 of the mobile body 10 detects event information indicating the deadlock. For example, the mobile body 10 stops when a surrounding target object is located within a predetermined distance. Thus, for example, when the sensor 26A detects another mobile body 10 at a position within a predetermined distance on a travel direction side and another mobile body 10 remains at the position, the event detection unit 84 determines that a deadlock has occurred and detects the event information indicating the deadlock. Even in a case where the sensor 26A detects another mobile body 10 at a position within a predetermined distance on a travel direction side, if an avoidance route toward the travel direction side can be generated, the mobile body 10 switches to the avoidance route to continue to move. Thus, it is not necessary to determine that a deadlock has occurred.

When acquiring the event information indicating the deadlock from the mobile body 10, the information processing device 14 causes the route setting unit 62 to output a command to stop the movement to all the mobile bodies 10. The example of FIG. 12 illustrates a case in which a deadlock has occurred between the mobile body 10A and the mobile body 10B. In this case, the information processing device 14 acquires the event information indicating the deadlock from the mobile body 10A and the mobile body 10B. When acquiring the event information indicating the deadlock, the route setting unit 62 of the information processing device 14 stops all the mobile bodies 10 (the mobile bodies 10A, 10B, and 10C in the example of FIG. 12). When receiving the command, each of the mobile bodies 10 stops moving. Then, the route setting unit 62 sets a next route (updated route) to an updated movement destination that is a position different from the movement destination of the current route for some mobile bodies 10 of the mobile bodies 10 at which the deadlock has occurred and does not set a next route for the other mobile bodies 10 of the mobile bodies 10 at which the deadlock has occurred. More specifically, the route setting unit 62 selects, for each of the mobile bodies 10 at which the deadlock has occurred, a mobile body 10 having the highest priority of the mobile bodies 10 at which the deadlock has occurred based on the priority information about the current work, does not set a next route for the selected mobile body 10, and sets a next route for the rest of the mobile bodies 10. In the example of FIG. 12, since the mobile body 10A has the highest priority, the route setting unit 62 maintains, for the mobile body 10A, the current route without setting an updated route. On the other hand, the route setting unit 62 sets an updated route from the current position to an updated movement destination for the mobile body 10B other than the mobile body 10A having the highest priority. The route setting unit 62 sets a position (waypoint) not overlapping with the route of the mobile body 10A, which is the counterparty of the deadlock, as the updated movement destination. For example, the route setting unit 62 selects, as an updated movement destination, a position closest to the current position of the mobile body 10B from among candidate positions (for example, a waiting point or a charging point), and sets an updated route from the current position to the updated movement destination. The route setting unit 62 transmits the set updated route to the mobile body 10B, and the mobile body 10B moves to the updated movement destination along the updated route. In the example of FIG. 12, an updated route (route Rf) from a waypoint An to a waypoint Ad is set, and the mobile body 10B moves to the waypoint Ad along the updated route, where the waypoint An is the current position of the mobile body 10B and the waypoint Ad is a candidate position closest to the waypoint An. If there is a plurality of the mobile bodies 10 at which the deadlock has occurred other than the mobile body 10 having the highest priority, an updated route is set to all of the plurality of mobile bodies 10 to cause all of the plurality of mobile bodies 10 to move to an updated movement destination.

When the movement of the mobile body 10B to the updated movement destination is completed, the route setting unit 62 outputs a command to resume the movement to the mobile body 10A. As illustrated in FIG. 13, the mobile body 10A that has stopped at the waypoint Am resumes the movement so as to move to the waypoint Ab that is the second position along the original route Rg. In addition, the route setting unit 62 reassigns, when the movement of the mobile body 10A having the highest priority is resumed, subsequent works to the other mobile bodies 10B and 10C and causes, when the movement of the mobile body 10A to the waypoint Ab is completed, the other mobile bodies 10B and 10C to start the subsequent works.

As described above, in the present example, when the deadlock occurs, the updated route is set to evacuate the mobile body 10 having a low priority, and then the mobile body 10 having a high priority is caused to continue the work. Accordingly, it is possible to appropriately resolve the deadlock and suppress the reduction in the operating ratio.

Processing Flow

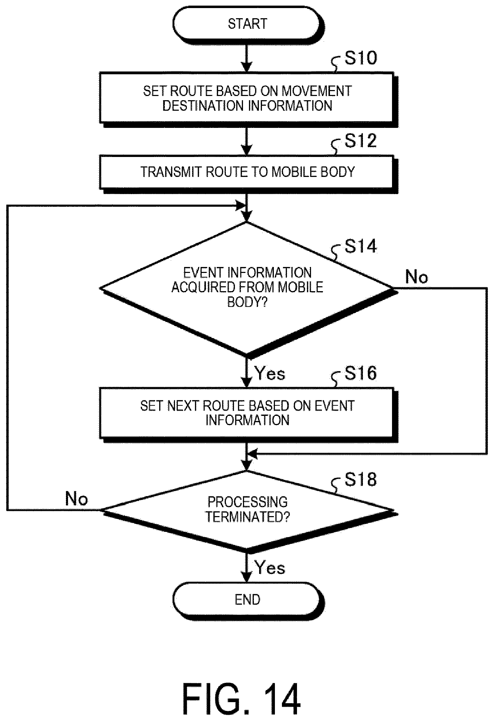

Next, a flow of the above-described processing of the information processing device will be described. FIG. 14 is a flowchart for describing a processing flow of the information processing device. As illustrated in FIG. 14, the information processing device 14 causes the movement destination information acquisition unit 60 to acquire the movement destination information from the management device 12, and causes the route setting unit 62 to set a route R of a mobile body 10 based on the movement destination information (step S 10). The information processing device 14 causes the route setting unit 62 to transmit the set route R to the mobile body 10 (step S12). The mobile body 10 moves along the set route R, detects whether an event unexpected at the time of setting the route R (end of movement, a charge amount, a failure, an obstacle, a deadlock, or the like) occurs, and, when the event is detected, transmits event information indicating the event to the information processing device 14. When acquiring the event information indicating the event from the mobile body 10 (step S14; Yes), the information processing device 14 causes the route setting unit 62 to set a next route for the mobile body 10 based on the event information (step S16). Then, when the processing is to be terminated (step S18; Yes), the present processing is terminated, and when the processing is not to be terminated (step S18; No), the processing returns to step S14 so as to be continued. When the event information is not acquired from the mobile body 10 (Step S14; No), the processing also proceeds to step S18.

Effect

As described above, the information processing device 14 according to the present disclosure includes the movement destination information acquisition unit 60 configured to acquire movement destination information indicating a position of a movement destination, the route setting unit 62 configured to set a route R to the movement destination for a mobile body 10 based on the movement destination information, and the event acquisition unit 64 configured to acquire event information indicating that an event unexpected at a time of setting the route R has occurred in the mobile body 10 moving along the route R. The route setting unit 62 sets a next route of the mobile body 10 based on the event information. According to the present disclosure, since the next route corresponding to the event can be set and the work can be continued, the reduction in the operating ratio of the mobile bodies 10 can be suppressed.

The event acquisition unit 64 acquires the event information from the mobile body 10. According to the present disclosure, since the event information is acquired from the mobile body 10, an event that has occurred in connection with the mobile body 10 can be appropriately detected, and a next route can be appropriately set.

The event acquisition unit 64 detects information indicating that the movement along the route R has been completed as the event information. When the event information indicating that the movement along the route R has been completed is acquired, the route setting unit 62 sets a route to an updated movement destination, which is a position different from the movement destination, as a next route of the mobile body 10 that has completed the movement along the route R. According to the present disclosure, when the movement of the mobile body 10 is completed, the mobile body 10 is caused to move to the updated movement destination without staying at the position at which the movement is completed. Accordingly, it is possible to prevent the mobile body 10 that has completed the movement from interfering with other mobile bodies 10, and to suppress the reduction in the operating ratio of the mobile bodies 10.

The route setting unit 62 sets an updated movement destination based on the charge amount of the mobile body 10. Accordingly, it is possible to suppress the reduction in the operating ratio of the mobile bodies 10 while also considering the charge amount.

The event acquisition unit 64 acquires information on the charge amount of the mobile body 10 as the event information, and when the charge amount of the mobile body 10 is less than a threshold value, the route setting unit 62 sets a route to a charging point as a next route of the mobile body 10. According to the present disclosure, when the charge amount of the mobile body 10 falls to a low level, the mobile body 10 is caused to move to the charging point without performing a next work. Accordingly, the mobile body 10 can be charged quickly, and the reduction in the operating ratio can be suppressed.

The route setting unit 62 sets a route to a scheduled movement destination of the first mobile body whose charge amount is less than the threshold value as a next route of the second mobile body other than the first mobile body. According to the present disclosure, a work of the first mobile body whose charge amount has fallen to a low level is assigned to the second mobile body. Thus, it is possible to prevent a delay in the work of the first mobile body whose charge amount has fallen to a low level and to suppress the reduction in the operating ratio.

The route setting unit 62 sets a route to a scheduled movement destination of the first mobile body to, of a plurality of second mobile bodies, a second mobile body having shortest time to reach the scheduled movement destination (first position) of the first mobile body from the movement destination (second position) of the second mobile body. Accordingly, the work of the first mobile body can be quickly performed, and thus the reduction in the operating ratio can be suppressed.

When the charge amount of a mobile body 10 that is being charged at a charging point becomes equal to or larger than a predetermined value higher than a threshold value, the route setting unit 62 sets a route from the charging point of the mobile body 10 as a next route.

According to the present disclosure, since a work is reassigned to the charged first mobile body, the reduction in the operating ratio can be suppressed.

The event acquisition unit 64 acquires information indicating that the mobile body 10 has failed as the event information. When the event information indicating that the mobile body 10 has failed is acquired, the route setting unit 62 sets next routes of other mobile bodies 10 so as not to pass through a position within a predetermined distance from the position of the failed mobile body 10. Accordingly, it is possible to prevent the works of the other mobile bodies 10 from being interrupted by the failed mobile body 10, and suppress the reduction in the operating ratio.

The event acquisition unit 64 acquires information indicating that an obstacle is present on a route R as the event information. When the event information indicating that the obstacle is present on the route R is acquired, the route setting unit 62 sets a next route of the mobile body 10 so as not to pass through a position within a predetermined distance from the position of the obstacle. Accordingly, it is possible to prevent the work of the mobile body 10 from being interrupted by the obstacle, and suppress the reduction in the operating ratio.

The event acquisition unit 64 acquires information indicating that a deadlock has occurred as the event information. When the event information indicating that the deadlock has occurred is acquired, the route setting unit 62 sets a route to an updated movement destination, which is a position different from the movement destination, to some mobile bodies 10 of mobile bodies at which the deadlock has occurred and does not set a next route for the other mobile bodies of the mobile bodies 10 at which the deadlock has occurred. According to the present disclosure, when the deadlock occurs, the one of the mobile bodies 10 is caused to evacuate by setting the updated route, and subsequently the rest of the mobile bodies 10 are caused to continue works. Accordingly, it is possible to appropriately resolve the deadlock and suppress the reduction in the operating ratio.

The movement control system 1 according to the present disclosure includes the information processing device 14 and the management device 12 configured to set the movement destination information, and the information processing device 14 sets a next route of the mobile body 10 while maintaining a content of the movement destination information. Accordingly, it is not necessary to cause the management device 12, which is a host system, to reset the movement destination information, and thus it is possible to appropriately manage the facility W.

The movement control system 1 according to the present disclosure includes the information processing device 14 and the mobile bodies 10. According to the present disclosure, the reduction in the operating ratio of the mobile bodies 10 can be suppressed.

The embodiments of the present disclosure have been described above, but the embodiment is not limited by the details of the embodiments above. Furthermore, the constituent elements of the above-described embodiments include elements that are able to be easily conceived by a person skilled in the art, and elements that are substantially the same, that is, elements of an equivalent scope. Furthermore, the constituent elements described above can be appropriately combined. Furthermore, it is possible to make various omissions, substitutions, and changes to the constituent elements within a range not departing from the scope of the above-described embodiments.

Reference Signs List

    10 Mobile body
    12 Management device
    14 Information processing device
    40 Movement destination information setting unit
    60 Movement destination information acquisition unit
    62 Route setting unit
    64 Event acquisition unit
    80 Route acquisition unit
    82 Movement control unit
    84 Event detection unit
    A Waypoint

**Claims**

1. An information processing device, comprising:

   a movement destination information acquisition unit configured to acquire movement destination information indicating a position of a movement destination;
   a route setting unit configured to set a route to the movement destination for a mobile body based on the movement destination information; and
   an event acquisition unit configured to acquire event information indicating that an event unexpected at a time of setting the route has occurred for the mobile body moving along the route, wherein
   the route setting unit sets a next route of the mobile body based on the event information.

2. The information processing device according to claim 1, wherein the event acquisition unit acquires the event information from the mobile body.

3. The information processing device according to claim 2, wherein

   the event acquisition unit acquires, as the event information, information indicating that movement along the route has been completed, and the route setting unit sets, when the event information indicating that movement along the route has been completed is acquired, a route to an updated movement destination that is a position different from the movement destination.

4. The information processing device according to claim 3, wherein the route setting unit sets the updated movement destination based on a charge amount of the mobile body.

5. The information processing device according to any one of claims 2 to 4, wherein

the event acquisition unit acquires information on a charge amount of the mobile body as the event information, and
the route setting unit sets a route to a charging point when the charge amount of the mobile body is less than a threshold value.

6. The information processing device according to claim 5, wherein the route setting unit sets, to a second mobile body other than a first mobile body whose charge amount is less than the threshold value, a route to a scheduled movement destination of the first mobile body.

7. The information processing device according to claim 6, wherein the route setting unit sets the route to the scheduled movement destination of the first mobile body to, of a plurality of the second mobile bodies, a second mobile body having shortest time to reach the scheduled movement destination of the first mobile body from a movement destination of the second mobile body.

8. The information processing device according to any one of claims 5 to 7, wherein the route setting unit sets, when the charge amount of the mobile body being charged at the charging point is equal to or larger than a predetermined value higher than the threshold value, a route from the charging point of the mobile body.

9. The information processing device according to any one of claims 2 to 8, wherein

the event acquisition unit acquires, as the event information, information indicating that the mobile body has failed, and
the route setting unit sets, when the event information indicating that the mobile body has failed is acquired, a route of another mobile body so as not to pass through a position within a predetermined distance from a position of the mobile body that has failed.

10. The information processing device according to any one of claims 2 to 9, wherein

the event acquisition unit acquires, as the event information, information indicating that an obstacle is present on the route, and
the route setting unit sets, when the event information indicating that the obstacle is present on the route is acquired, a route of a mobile body so as not to pass through a position within a predetermined distance from the obstacle.

11. The information processing device according to any one of claims 2 to 10, wherein

the event acquisition unit acquires, as the event information, information indicating that a deadlock has occurred, and
when the event information indicating that the deadlock has occurred is acquired, the route setting unit sets a route to an updated movement destination that is a position different from the movement destination for some mobile bodies of mobile bodies at which the deadlock has occurred and does not set a next route for the other mobile bodies of the mobile bodies at which the deadlock has occurred.

12. A movement control system, comprising:

the information processing device according to any one of claims 1 to 11; and
a management device configured to set the movement destination information, wherein
the information processing device sets a next route of the mobile body while maintaining a content of the movement destination information.

13. A movement control system, comprising:

the information processing device according to any one of claims 1 to 11; and
the mobile body.

14. An information processing method, comprising:

acquiring movement destination information indicating a position of a movement destination;
setting a route to the movement destination for a mobile body based on the movement destination information; and
acquiring event information indicating that an event unexpected at a time of setting the route has occurred for the mobile body moving along the route, wherein
in the setting a route, a next route of the mobile body is set based on the event information.

**15.** A program for causing a computer to perform:

acquiring movement destination information indicating a position of a movement destination;
setting a route to the movement destination for a mobile body based on the movement destination information; and
acquiring event information indicating that an event unexpected at a time of setting the route has occurred for the mobile body moving along the route, wherein
in the setting a route, a next route of the mobile body is set based on the event information.

FIG. 1

FIG. 2

12

MANAGEMENT DEVICE

~ 30

COMMUNICATION UNIT

~ 32

STORAGE UNIT

~ 34

CONTROL UNIT

~ 40

MOVEMENT DESTINATION
INFORMATION SETTING UNIT

# FIG. 3

14

INFORMATION PROCESSING DEVICE

50

COMMUNICATION UNIT

52

STORAGE UNIT

54

CONTROL UNIT

60

MOVEMENT DESTINATION
INFORMATION ACQUISITION UNIT

62

ROUTE SETTING UNIT

64

EVENT ACQUISITION UNIT

# FIG. 4

28

CONTROL DEVICE

70

COMMUNICATION UNIT

72

STORAGE UNIT

74

CONTROL UNIT

80

ROUTE ACQUISITION UNIT

82

MOVEMENT CONTROL UNIT

84

EVENT DETECTION UNIT

FIG. 5

| PRIORITY INFORMATION | TARGET OBJECT INFORMATION | FIRST POSITION | SECOND POSITION |
|---|---|---|---|
| 0001 | 01 | A1 | A100 |
| 0002 | 11 | A11 | A101 |
| 0003 | 02 | A2 | A105 |

# FIG. 6

FIG. 7

EP 4 246 091 A1

FIG. 8

EP 4 246 091 A1

| PRIORITY INFORMATION | TARGET OBJECT INFORMATION | FIRST POSITION | SECOND POSITION | MOBILE BODY INFORMATION |
|---|---|---|---|---|
| 0004 | 01 | A1 | A100 | 10B |
| 0005 | 11 | A11 | A101 | 10C |
| 0006 | 02 | A2 | A105 | 10B |

| PRIORITY INFORMATION | TARGET OBJECT INFORMATION | FIRST POSITION | SECOND POSITION | MOBILE BODY INFORMATION |
|---|---|---|---|---|
| 0004 | 01 | A1 | A100 | 10A |
| 0005 | 11 | A11 | A101 | 10C |
| 0006 | 02 | A2 | A105 | 10B |

# FIG. 9

FIG. 10

FIG. 11

EP 4 246 091 A1

EP 4 246 091 A1

FIG. 12

FIG. 13

START

SET ROUTE BASED ON MOVEMENT
DESTINATION INFORMATION
S10

TRANSMIT ROUTE TO MOBILE BODY
S12

EVENT INFORMATION
ACQUIRED FROM MOBILE
BODY?
S14

No

Yes

SET NEXT ROUTE BASED ON EVENT
INFORMATION
S16

PROCESSING
TERMINATED?
S18

No

Yes

END

FIG. 14

Europäisches
Patentamt

European
Patent Office

Office européen
des brevets

# EUROPEAN SEARCH REPORT

Application Number

EP 23 16 1742

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/333791 A1 (TAKAO KENJI [JP] ET AL) 28 October 2021 (2021-10-28) | 1-3, 8-10, 12-15 | INV.<br>G01C21/20<br>G05D1/02<br>G06Q10/08 |
| Y | * paragraphs [0050] – [0098]; figures 1, 3-5 * | 4-7,11 | |
| Y | US 2021/103296 A1 (LEE MINSU [KR] ET AL) 8 April 2021 (2021-04-08) * paragraphs [0058], [0093] – [0094]; figure 11 * | 4,5 | |
| Y | US 2016/048130 A1 (VAVRICK PAUL H [US]) 18 February 2016 (2016-02-18) * paragraphs [0003], [0013] * | 4,5 | |
| Y | US 2020/377128 A1 (MARCZUK KATARZYNA ANNA [SG] ET AL) 3 December 2020 (2020-12-03) * paragraphs [0149], [0151], [0261] – [0266] * | 4,5 | |
| Y | US 2021/069901 A1 (ODA TAKAHIRO [JP] ET AL) 11 March 2021 (2021-03-11) * paragraphs [0003] – [0093] * | 6,7 | TECHNICAL FIELDS SEARCHED (IPC)<br><br>B66F<br>G01C<br>G05D<br>G06Q |
| Y | JP H06 83444 A (SHINKO ELECTRIC CO LTD) 25 March 1994 (1994-03-25) * abstract * | 11 | |

The present search report has been drawn up for all claims

| Place of search | Date of completion of the search | Examiner |
|---|---|---|
| The Hague | 2 August 2023 | van Doornum, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 1742

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2023

| Patent document cited in search report | | Publication date | Patent family member(s) | | Publication date |
|---|---|---|---|---|---|
| US 2021333791 | A1 | 28-10-2021 | CN | 113655782 A | 16-11-2021 |
| | | | EP | 3904990 A1 | 03-11-2021 |
| | | | JP | 2021174386 A | 01-11-2021 |
| | | | US | 2021333791 A1 | 28-10-2021 |
| US 2021103296 | A1 | 08-04-2021 | KR | 20210040216 A | 13-04-2021 |
| | | | US | 2021103296 A1 | 08-04-2021 |
| | | | WO | 2021066416 A1 | 08-04-2021 |
| US 2016048130 | A1 | 18-02-2016 | CN | 105373120 A | 02-03-2016 |
| | | | DE | 102015112773 A1 | 18-02-2016 |
| | | | US | 2016048130 A1 | 18-02-2016 |
| US 2020377128 | A1 | 03-12-2020 | US | 2020377128 A1 | 03-12-2020 |
| | | | US | 2023113298 A1 | 13-04-2023 |
| US 2021069901 | A1 | 11-03-2021 | JP | 7003979 B2 | 21-01-2022 |
| | | | JP | 2021043520 A | 18-03-2021 |
| | | | US | 2021069901 A1 | 11-03-2021 |
| JP H0683444 | A | 25-03-1994 | NONE | | |

EPO FORM P0459

For more details about this annex : see Official Journal of the European Patent Office, No. 12/82

**REFERENCES CITED IN THE DESCRIPTION**

**Patent documents cited in the description**

- JP 6599139 B